# EUROPÄISCHE PATENTSCHRIFT

(11) **EP 2 764 225 B1**
(45) Veröffentlichungstag und Bekanntmachung des Hinweises auf die Patenterteilung: **21.06.2017**
(21) Anmeldenummer: 12772881.4
(22) Anmeldetag: 27.09.2012
(51) Int. Cl.: F02B 75/28, F02B 63/04, F01B 7/14, F01B 23/10

(54) **MOTOR-GENERATOR-ANORDNUNG**
MOTOR-GENERATOR ARRANGEMENT
ENSEMBLE MOTEUR-GÉNÉRATEUR

(30) Priorität: 04.10.2011 DE 102011114854
(43) Veröffentlichungstag der Anmeldung: 13.08.2014
(73) Patentinhaber: Kurutas, Enver, 47249 Duisburg (DE); Schroer, Peter, 47226 Duisburg (DE)
(72) Erfinder: Kurutas, Enver, 47249 Duisburg (DE); Schroer, Peter, 47226 Duisburg (DE)
(74) Vertreter: Schmidt, Karl Michael
(86) Internationale Anmeldenummer: PCT/EP2012/004048
(87) Internationale Veröffentlichungsnummer: WO 2013/050118

(56) Entgegenhaltungen:
- BE-A- 674 598
- CH-A- 249 224
- DE-B- 1 253 948
- US-A- 2 334 917
- US-A- 2 401 188
- US-A- 2 840 060

## Beschreibung

Die Erfindung betrifft eine Motor-Generator-Anordnung mit einem Verbrennungsmotor nach dem Gegenkolbenprinzip, mit einer Anordnung von mindestens zwei in einem Zylinder mit gemeinsamer Brennkammer laufender Gegenkolben, gemäß Oberbegriff des Patentanspruches 1.

Sogenannte Gegenkolbenmotoren sind bereits lange bekannt. Motoren dieser Art wurden bereits für den Flugzeugbau eingesetzt. Dennoch hat es keine Weiterverbreitung dieser Motorentechnik für den Flugzeugbau gegeben.Ein Problem dieser Technologie war, dass der Motor als Selbstzünder ventilfrei ausgebildet ist und somit bei relativ hohen Drücken und Temperaturen betrieben wird. Hierbei sind jedoch neue Technologien, beispielsweise die Verwendung von sogenannten Karbonkolben mit Kohlenstoffkeramik zum Einsatz gekommen, so dass das Motorprinzip als solches doch betriebstauglich wird. Aus der DE 20 2010 001 006 U1 ist bekannt, einen solchen Motor in Verbindung mit einem Generator anzuwenden. Dabei sind jedoch keinerlei weitere diesbezügliche technische Maßnahmen angegeben. Aus der US 2 334 917 A und der CH 249 224 A sind Gegenkolbenmotoren gemäß Oberbegriff des Anspruches 1 bekannt.

Aus dem US Patent 2,334,917 ist eine Gegenkolbenmotor bekannt, bei welchem die Pleuel mit Exzentern verbunden sind.

Aus der deutschen Auslegeschrift 1 253 948 ist eine Vorrichtung zur Schmierung des Hubzapfenlagers von Brennkraftmaschinen bekannt, die bei welchem ein Schaufelkranz vorgesehen ist der in ein Ölbad eintaucht, und Öl zur Schmierung nach oben schleudert. Eine solche Maßnahme ist dem Grunde nach richtig, jedoch ist dadurch allein noch nicht gewährleistet, dass das hochgeschleuderte Öl auch gleichverteilt und zuverlässig an die zu schmierdenen Stellen geführt wird.

Aus der US 2,213,682 ist weiterhin eine Energieerzeugungseinrichtung mit den oberbegrifflichen Merkmalen bekannt. Dabei erfolgt eine Kopplung der beiden Abtriebe der Kurbelwellen der beiden Gegenkolben über eine Kette oder einen Zahnriemen. Eine solche Art Kopplung der direkten Kurbelwellenabtriebe des Gegenkolbenmotors hat den erheblichen Nachteil, dass eine Kette oder ein Riemen nur eine unvollkommene mechanische

Kopplung der beiden Kurbelwellen erreicht. Dies führt dazu, dass sich dieser mechanische Schlupf direkt auf die Kolbenlagen des Gegenkolbenmotors auswirken und zu einem unexakten Verlauf der relativen Kolbenbewegungen führt. Bei einem Gegenkolbenmotor ist zu beachten, dass bei jeder Umdrehung eine Drehmomentumkehr erzeugt wird. Bei einer solchen Kopplung der Kurbelwellen mit einer Kette oder einem Riemen, fängt das System an zu schwingen und zehrt somit Energie auf. Der Erfindung liegt daher die Aufgabe zugrunde, eine Motor-Generator-Anordnung für den Verwendungszweck in einem Blockheizkraftwerk so einzusetzen, dass ein signifikant höherer Wirkungsgrad als bei bisher bekannten Verbrennungsmaschinen erreicht wird, und das Prinzip so effektiv für die Kraftwärmekopplung einsetzbar ist. Die gestellte Aufgabe wird bei einer Motor-Generator-Anordnung der gattungsgemäßen Art erfindungsgemäß durch die kennzeichneten Merkmale des Patentanspruches 1 gelöst. Weitere vorteilhafte Ausgestaltungen der Erfindung sind in den abhängigen Ansprüchen angegeben. Kern der Erfindung ist, dass jeweils zwischen den Abtrieben der Kurbelwellen und dem Koppelgetriebe und/oder zwischen dem Koppelgetriebe und den Kupplungsgetrieben torsionselastische und/oder seitenversetzbare Kopplungselemente angeordnet sind, und dass die Kolben über Pleuel in Eingriff stehenden Kurbelwellen an mindestens einer Seite neben dem Pleueleingriff an der Kurbelwelle mit mindestens einem nichtrotations-symmetrischen Exzenterschwungkörper versehen ist, und dass der Exzenterschwungkörper mit einer wiederum direkt daneben zentrisch zu Kurbelwelle laufenden Kreisscheiben- oder Kreisringelement versehen ist, und Exzenterschwungkörper und/oder Kreisscheibenelement im Betrieb zumindest teilweise in ein Ölbad einer Ölwanne eintauchen. Bei einer Einzylinder-Anordnung sind zwei Gegenkolben und somit zwei gegenüberliegende Kurbelwellen vorhanden. Bei einem Zwei- oder Mehrzylindermotor sind vier bzw mehr Kolben vorhanden, bei denen sich aber immer zwei in einem Zylinder laufend gegenüber liegen. Auch bei einer Mehrfachzylinderanordnung liegen sich immer zwei Kolben in einem Zylinder gegenüber. Ordnet man diese Zylinder parallel an, so hat man auf der einen Seite ein Reihe von Kolben und auf der anderen Seite, so dass sich auch bei Mehrzylinderanordnung immer zwei gegenüberliegende Kurbelwellen ergeben, weil die Kolben einer Seite auf die
eine gemeinsame Kurbelwelle einwirken, und die Kolben der anderen Seite auf die gemeinsame andere Kurbelwelle einwirken.

So wird effektiv die Energie beider Kolben oder Kolbengruppen auf den jeweiligen Generator durchgesteuert. Es findet keine starre Kopplung auf einer Kurbelwelle statt, womit Reibungsverluste einhergehen würden. Stattdessen werden die beiden Abtriebe der getrennten Kurbelwellen nur synchron gekoppelt um einen entsprechenden Gleichlauf der Anordnung zu erreichen. Dennoch werden weiterhin zwei Abtriebe vorgesehen, die mit jeweils einem Generator belegt werden.

In vorteilhafter Ausgestaltung ist vorgesehen, dass für den Einsatz in einem Blockheizkraftwerk BHKW, am Ausgang des Koppelgetriebes zwei weitere Abtriebe vorgesehen sind, und jeder dieser Abtriebe über jeweils ein Kopplungselement oder eine Getriebe-Kupplung-Anordnung mit einem, oder jeweils einem Generator verbunden ist. Erfindungsgemäß ist angegeben, dass die mit den Kolben über Pleuel in Eingriff stehenden Kurbelwellen an mindestens einer Seite neben dem Pleueleingriff an der Kurbelwelle mit mindestens einem nicht rotationssymmetrischen Exzenterschwungkörper versehen ist beziehungsweise sind und dass der Exzenterschwungkörper mit einem wiederum direkt daneben zentrisch zur Kurbelwelle laufenden Kreisscheiben-oder Kreisringelement versehen ist, und Exzenterschwungkörper und Kreisscheibenelement in Betrieb zumindest teilweise in ein Ölbad einer Ölwanne eintauchen.

In weiterer vorteilhafte Ausgestaltung ist vorgesehen, dass auf einer der Kurbelwellen eine Nockenscheibe angeordnet ist, über welche eine Kraftstoffeinspritzpumpe betätigt wird, welche an dem entsprechenden Kurbelgehäuse angeordnet ist. So wird direkt über die besagte Kurbelwelle ohne weitere Umlenkung die Kraftstoffeinspritzpumpe fortlaufend mechanisch betätigt.

In weiterer vorteilhafter Ausgestaltung ist angegeben, dass die Kraftstoffeinspritzpumpe auf einem Tragelement (Support) angeordnet ist, welches in seiner Position winkelverstellbar ist. Auf diese Weise lässt sich der optimale Kraftstoffeinspritzzeitpunkt sogar im Betrieb nachjustieren und optimieren.

Der Exzenterkörper dient nicht nur zur Drehmomentvergleichsmässigung der Kolbenbewegung und zum Erhalten eines fortlaufenden Schwungs in einer vorgesehenen Drehrichtung, sondern dieser Schwungkörper, da er exzentrisch auf der Kurbelwelle sitzt, taucht über einen Teilwinkel seiner Umfangsbewegung temporär bei jeder Umdrehung in ein Ölbad ein und nimmt Öl mit in die Anordnung, die oberhalb der Ölwanne liegt. Das Kreisring- oder Kreisscheibenelement, welches direkt neben dem Exzenterkörper angeordnet ist führt dazu, dass es zu einer Gleichverteilung des nach oben ausgetragenen oder hoch transportierten Öles kommt. Somit wird das transportierte Öl an den zu schmierenden Lagerstellen gleichmäßig verteilt, ohne dass eine Ölpumpe vorgesehen sein muss. Dies ist der erhebliche Vorteil dieser Einrichtung, da insbesondere im Betrieb als Selbstzünder trotz hoher Betriebstemperaturen und -drücke eine entsprechende zuverlässige, aber in diesem Fall erfindungsgemäß unmotorische Dauerschmierung gewährleistet wird.

In weiter vorteilhafter Ausgestaltung ist angegeben, dass der Motor und das Koppelgetriebe auf einem gemeinsamen Trägerchassis angeordnet sind. Dies hat den Vorteil, dass dies zu einer gleichlaufenden Koppelung der Elemente führt, wobei die starre Verbindung über das Trägerchassis zwischen Motor und Koppelgetriebe die eigentliche Krafteinkopplung so schützt, dass keine Relativbewegungen von Motorblock und Koppelgetriebe beispielsweise im Anlaufmoment oder beim Abbremsen auftreten.

In weiterer vorteilhafter Ausgestaltung ist angegeben, dass die mechanische Kopplung zwischen Kopplungsgetriebe und Kupplung des Generators über ein torsionselastisches Kopplungselement erfolgt. Diese besagten torsionselastischen Kopplungselemente sorgen zusätzlich noch dafür, dass die Kopplung absolut harmonisch mit dem eigentlichen Motor zusammenwirkt und gegebenenfalls Fehlanpassungen ausgeglichen werden. Dies ist von besonderer Bedeutung im Anlaufmoment bei Zünden der Maschine, wenn diese über eine Kupplung an die Generatoren gekoppelt werden muss. Außerdem entlasten diese torsionselastischen Kopplungselemente das Getriebe in ganz erheblichen Masse, so dass beispielsweise zur Kostenreduktion sogar Kunststoffgetriebe zum Einsatz kommen können, beispielsweise aus widerstandsfähigen Kunststoffen, wie Polycarbonaten oder beispielsweise auch Polyurethan, gegebenenfalls carbonverstärkt, bestehen. Besonders vorteilhaft für diesen bestehenden Anwendungsfall ist der Werkstoff Guss-Polyamid.

In weiterer vorteilhafter Ausgestaltung ist angegeben, dass der Gegenkolbenmotor ein ventilloser selbstzündender Injektionsmotor ist. All dies ist in vorteilhafter Weise ein Zusammenspiel aller bereits erwähnten Elemente, die einen höchst effektiven, wirkungsgradoptimierten und wartungsarmen Motor zur Verwendung in meist dauerbetriebenen Blockheizkraftwerken ergibt.

Alternativ dazu ist angegeben, dass der Motor auch als ein fremdgezündeter Motor ausgestaltet sein kann.

In diesbezüglicher weiterer Ausgestaltung ist angegeben, dass der Motor ein Gasmotor oder ein Allgasmotor ist.

Die Erfindung ist in der Zeichnung dargestellt und nachfolgend näher beschrieben.

Es zeigt:
- Figur 1:: perspektivische Ansicht auf das Ausführungsbeispiel
- Figur 2:: Teildarstellung der Kurbelwelle mit Schmierungselementen
- Figur 3:: Kopplungselemente
- Figur 4:: Vorderansicht auf Ausführungsbeispiel
- Figur 5:: Seitenansicht
- Figur 6:: Perspektivische Ansicht des Motors
- Figur 7:: Kurbelwellengehäuse

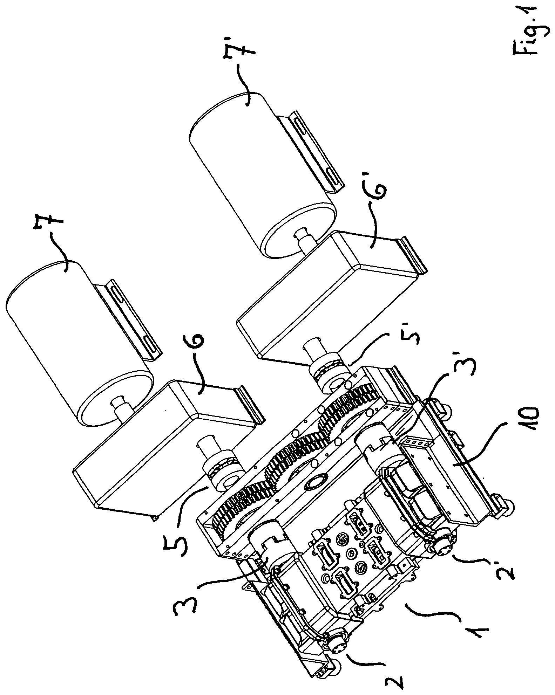

Figur 1 zeigt im Überblick die gesamte Anordnung. Der Motor hat einen zentralen Motorblock 1 und einen oder mehr Zylindern, die jeweils für zwei Gegenkolben pro Zylinder ausgelegt sind.

An beiden gegenüberliegenden Seiten des Zylinders oder der Zylinderanordnung, es kann sich auch um einen Zweizylindermotor handeln, wie in Figur 1 dargestellt, sind dann die Kurbelwellengehäuse 2 und 2' angeordnet. Die Kurbelwellengehäuse 2 und 2' haben wiederum jeder für sich einen Abtrieb 3 bzw 3', so dass bei einem Einzylinder- Zweikolbenmotor, aber auch bei einem Mehrzylinderaggregat zwei Kurbelwellen jeweils einen Abtrieb bilden. Diese sind über Kopplungselemente, die bereits torsionselastisch sind, mit einem gemeinsamen Kopplungsgetriebe 4 verbunden. Das Kopplungsgetriebe 4 hat lediglich die Aufgabe beide Kurbelwellenbewegungen aufeinander zu synchronisieren und die Synchronisation auch im Dauerbetrieb zu erhalten. Axial jeweils durchgehend sind dann die beiden Abtriebe 3 und 3', dargestellt, die wiederum mit torsionselastischen Kopplungselementen 5 und 5' versehen sind und in die Getriebe- und/oder Fliegkraftkupplungsgehäuse 6, 6' der beiden Generatoren 7, und 7' einmünden. Die besagten Kopplungselemente 5 und 5' sind dabei zumindest torsionselastisch, können jedoch auch so ausgebildet sein, dass sie einen Seitenversatz oder auch einen angularen Versatz zulassen. Auf diese Weise können mechanische Fehlanpassungen des Systems einfach ausgeglichen werden und die Anordnung ist somit leicht im Aufbau und auch leicht zu handhaben. Über die entsprechenden Getriebe 6 und 6' und gegebenenfalls mit oder ohne Fliegkraftkupplung sind dann die Generatoren 7 und 7' an den beiden Abtrieben angekoppelt. Hierbei ist auch erkennbar, dass der eigentliche Verbrennungsmotor 1 und das Koppelgetriebe 4 auf einem gemeinsamen Chassis 10 angeordnet sind, mit den oben genannten Vorteilen. Eine weiterführende Anordnung auf gemeinsamem Chassis, zusammen mit den übrigen Elementen ist möglich aber nicht zwingend.

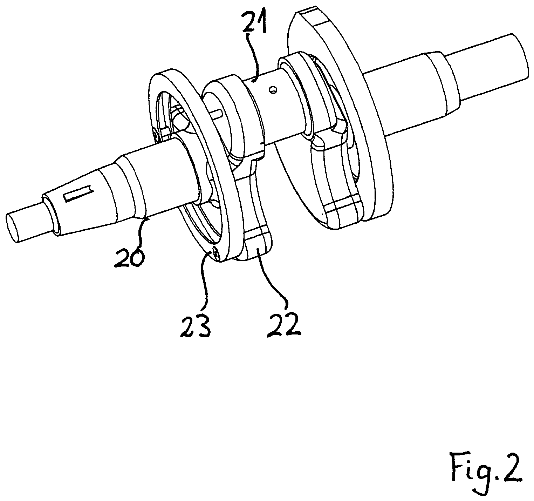

Figur 2 zeigt das hierbei verwendete Schwung- und Schmiersystem für diese Antriebsvariante. Auf der jeweiligen Kurbelwelle 20 ist in diesem Falle am Pleuelexzenter 21 auf beiden axialen Seiten jeweils ein exzentrischer Schwungkörper 22 angeordnet. In diesem Falle sind es zwei Schwungkörper. An einem der Schwungkörper ist zusätzlich axial ein Kreisring 23 angebracht. Dieser Kreisring 23 läuft dabei zentrisch zur Kurbelwellenhauptachse und nicht zur exzentrischen Pleuelachse. Wie oben bereits beschrieben, ist das Kurbelgehäuse um diese Kurbelwellen für jeden Kolben so beschaffen, dass im unteren Bereich eine Ölwanne vorgesehen ist. Die Abmessungen des Kurbelgehäuses sind dabei so gewählt, dass der Ezenterkörper 22 über einen Teilumfang seiner Drehung immer wieder in das Ölbad eintaucht und somit Öl mit nach oben schleudert. Über den zusätzlich angeordneten Kreisring 23 oder gegebenenfalls auch eine Kreisscheibe, wird dann das hoch geschleuderte Öl gleich verteilt und führt zu einer Vergleichmäßigung der Zuführung von Öl an die zu schmierenden Stellen.

Somit wird eine pumpenfreie Dauerschmierung des Systems gewährleistet.

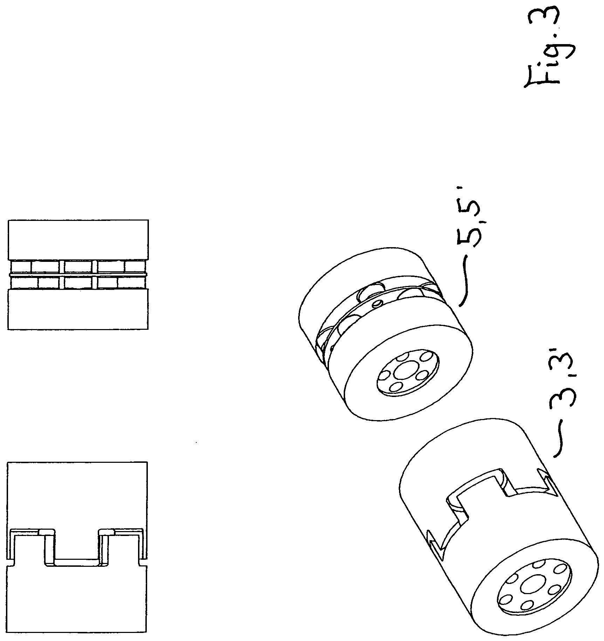

Figur 3 zeigt nochmals im Detail die Kopplungselemente 3, 3' bzw 5, 5' zwischen den Kurbelwellenabtrieben und dem Koppelgetriebe 4 bzw dem Koppelgetriebe 4 und den Kupplungsgetrieben 6, 6' der Generatoren 7, 7'. Dieser Kopplungstyp dämpft die radiale Schräglage aber gegebenenfalls auch Torsions- und Seitenversatz.

Zusätzlich sind, wie oben auch in Figur 1 dargestellt, auch noch zwischen Koppelgetriebe und den Kupplungen und/oder Getrieben der Generatoren entsprechende torsionselastische und seitenversetzbare Kopplungselemente vorgesehen.

Insgesamt eignet sich diese Motor-Generator-Anordnung im ganz erheblichen Maße für den Einsatz in Blockheizkraftwerken, da der Wirkungsgrad signifikant höher liegt als bei normalen Verbrennungsmaschinen.

Übliche Treibstoffe können Dieselöl sein, aber auch pflanzliche Öle, Abfallöle etc.

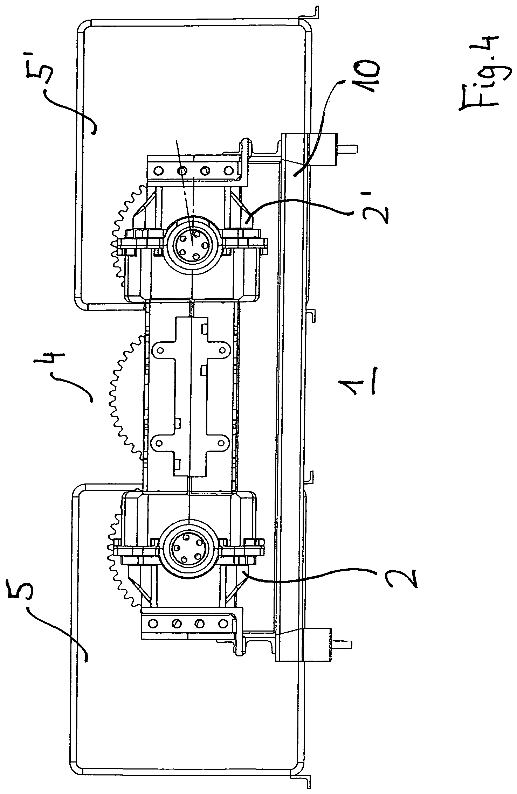

Figur 4 zeigt in einer Vorderansicht, von der Motorseite gesehen, die Anordnung. Zu erkennen sind die gegenüberliegenden Kurbelwellengehäuse 2 und 2' der Gegenkolben. Hierbei wird auch die Lage der Getriebezahnräder des Kopplungsgetriebes 4 deutlich, die die Kubelwellenbewegungen und die entsprechenden Bewegungen der Gegenkolben harmonisch aufeinander abstimmen und die Bewegung sychronisieren, in dem Sinne, dass der gewollte Hubversatz der Gegenkolben, wie er bei Gegenkolben bekannt ist, fest sychronisiert, und somit ein fixierter und extrem hoher Gleichlauf gewährleistet wird. Dies ist für den Generator deshalb wichtig, weil die Ausgangsspannung sowie insbesondere die abgreifbare Frequenz bei Wechselstromgeneratoren auf die Netzfrequenz möglichst abgestimmt sein muss.

Ebenso ist das Trägerchassis 10 wie oben schon beschrieben, zu erkennen.

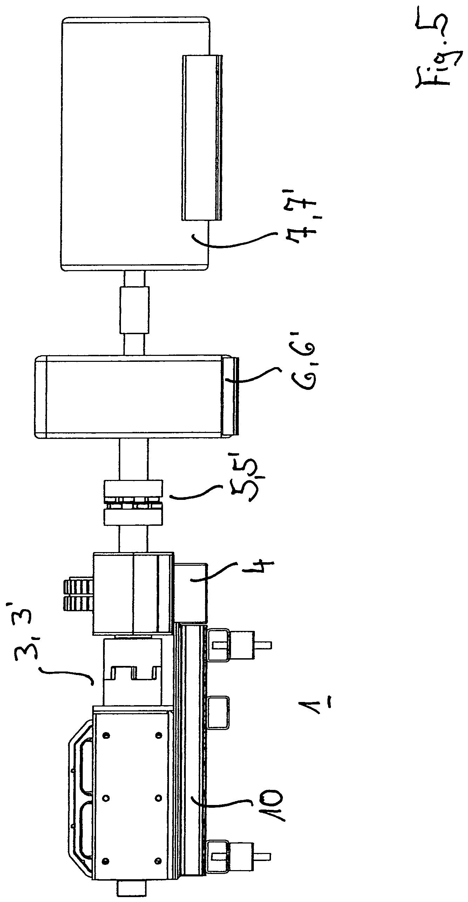

Figur 5 zeigt eine Seitenansicht mit der Lage der Einzelkomponenten wie oben schon beschrieben.

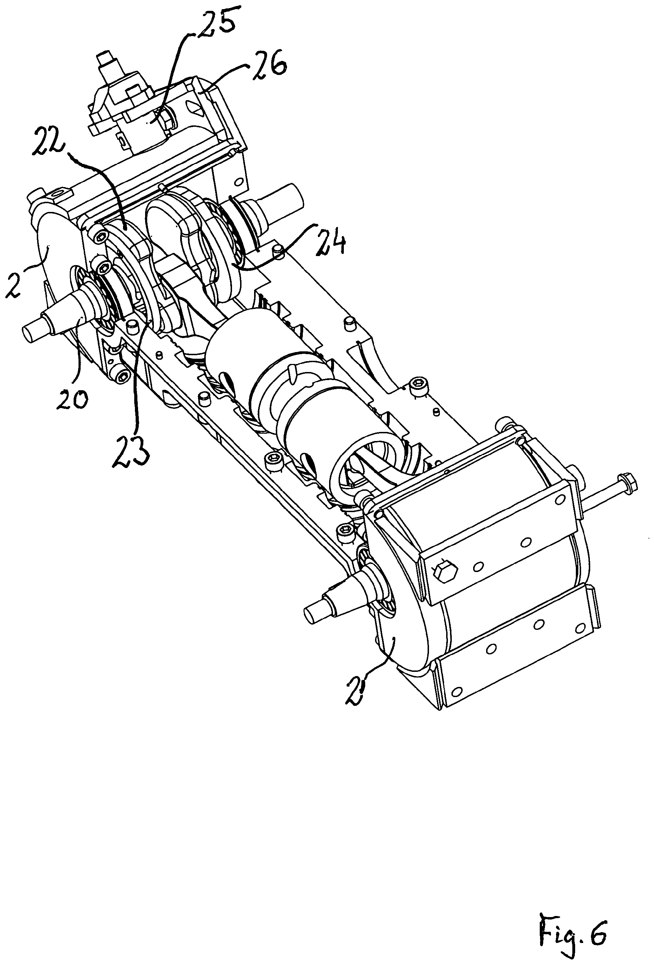

Figur 6 zeigt die perspektivische Ansicht des Motors. Das Kurbelwellenghäuse 2 nimmt dabei die Lagerung der Kurbelwelle auf. Auf der Kurbelwelle sind, wie bereits in Figur 2 zu erkennen, die Exzenter 22 und zumindest im

Kurbelwellengehäuse 2 noch eine Nockenscheibe 24 angeordnet.
Diese Nockenscheibe 24 betätigt die auf dem Kurbelwellengehäuse angeordnete Kraftstoff-Einspritzpumpe mechanisch. Dass heisst die Nockenscheiben führt bei jeder Ihrer Umdrehung eine exzentrische Abwicklung des Umfanges in der Form aus, dass in der Kraftstoffpumpe 25 so eine Kolbenhubbewegung ausgeführt wird. Die Kraftstoffeinspritzpumpe 25 ist dabei auf einem Support 26 angeordnet.

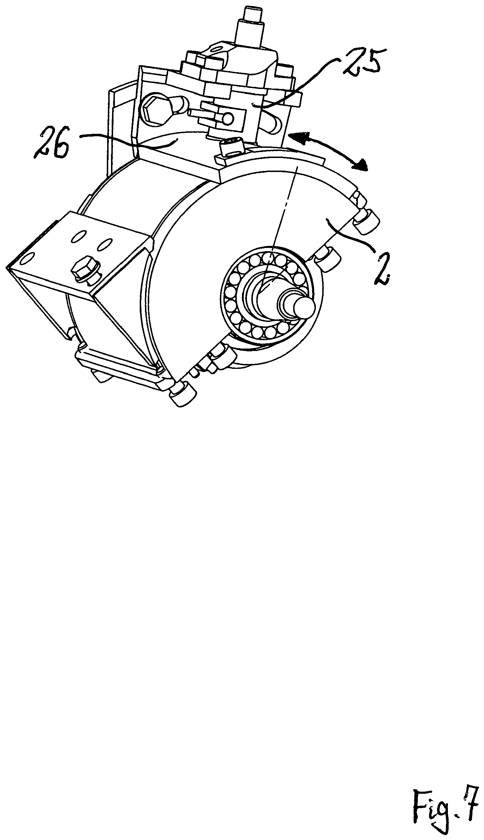

Figur 7 zeigt das Kurbelgehäuse 2 nochmals im Detail. Hierbei wird deutlich, dass der Support 26 samt Kraftstoffeinspritzpumpe 25 entlang der dargestellten Pfeilrichtung auf dem Kurbelwellengehäuse verschieblich ist. Auf diese Weise kann der Eingriff der in Figur 6 dargestellten Nockenscheibe auf die Kraftstoffeinspritzpumpe sogar während des Betriebes des Motors verstellt werden. So kann der Zeitpunkt der Kraftstoffeinspritzung nachjustiert und optimiert werden.

### Bezugszeichenliste:

- 1: Motor
- 2, 2': Kurbelwellengehäuse
- 3, 3': Abtriebe mit Kopplungselementen
- 4: Kopplungsgetriebe/Synchronisation
- 5, 5': Koppungselemente
- 6, 6': Kupplungen ggfs mit Getriebe
- 7, 7': Generatoren
- 10: gemeinsames Chassis
- 20: Kurbelwelle
- 21: Exzenter
- 22: Exzenterkörper/Schwungmasse
- 23: Kreisring
- 24: Nockenscheibe
- 25: Einspritzpumpe
- 26: Support für Einspritzpumpe

## Patentansprüche

1. Motor-Generator-Anordnung mit einem Verbrennungsmotor nach dem Gegenkolbenprinzip, mit einer Anordnung von mindestens zwei in einem Zylinder mit gemeinsamer Brennkammer laufender Gegenkolben, wobei die sich gegenüberliegenden Kolben auf jeweils eine eigene Kurbelwelle einwirken, und jede der beiden Kurbelwellen einen eigenen mechanischen Abtrieb (3, 3') aufweist, und die beiden Abtriebe (3, 3') über Kupplungsmittel (4) synchronisiert sind, wobei die beiden Abtriebe (3, 3') über ein riemen- oder kettenloses Koppelgetriebe (4) starr gekoppelt sind, **dadurch gekennzeichnet, dass** jeweils zwischen den Abtrieben der Kurbelwellen und dem Koppelgetriebe (4) und zwischen dem Koppelgetriebes (4) und den Kupplungsgetrieben (6, 6') torsionselastische und/oder seitenversetzbare Kopplungselemente angeordnet sind, und dass die Kolben über Pleuel in Eingriff stehenden Kurbelwellen an mindestens einer Seite neben dem Pleueleingriff an der Kurbelwelle mit mindestens einem nichtrotation-symmetrischen Exzenterschwungkörper versehen ist, und dass der Exzenterschwungkörper mit einer wiederum direkt daneben zentrisch zu Kurbelwelle laufenden Kreisscheiben- oder Kreisringelement versehen ist, und Exzenterschwungkörper und/oder Kreisscheibenelement im Betrieb zumindest teilweise in ein Ölbad einer Ölwanne eintauchen, derart, dass der Exzenterkörper (22) über einen Teilumgang seiner Drehung immer wieder in das Ölbad eintaucht und somit Öl nach oben schleudert, und über das Kreisscheiben- oder Kreisringelement (23) das hochgeschleuderte Öl vergleichmäßigt an die zu schmierenden Stellen zugeführt wird.

2. Motor Generatoranordnung nach Anspruch 1, **dadurch gekennzeichnet, dass** für den Einsatz in einem Blockheizkraftwerk BHKW, am Ausgang des Koppelgetriebes (4) zwei weitere Abtriebe vorgesehen sind, und jeder dieser Abtriebe über jeweils ein Kopplungselement (5, 5') oder eine Getriebe-Kupplung-Anordnung (6, 6') mit einem, oder jeweils einem Generator (7, 7') verbunden ist.

3. Motor-Generatoranordnung nach Anspruch 2,
**dadurch gekennzeichnet,**
**dass** auf einer der Kurbelwellen eine Nockenscheibe angeordnet ist, über über welche eine Kraftstoffeinspritzpumpe betätigt wird, welche an dem entsprechenden Kurbelgehäuse angeordnet ist.

4. Motor-Generatoranordnung nach Anspruch 3,
**dadurch gekennzeichnet,**
**dass** die Kraftstoffeinspritzpumpe auf einem Tragelement (Support) angeordnet ist, welches in seiner Position winkelverstellbar ist.

5. Motor-Generator-Anordnung nach Anspruch 1 oder 2,
**dadurch gekennzeichnet**
**dass** der Motor und die Koppelgetriebe auf einem gemeinsamen Trägerchassis angeordnet sind.

6. Motor-Generator-Anordnung nach einem der vorhergehenden Ansprüche,
**dadurch gekennzeichnet,**
**dass** auch die mechanische Kopplung zwischen Kopplungsgetriebe und Kupplung des Generators über ein torsionselastisches Kopplungselement erfolgt.

7. Motor-Generator-Anordnung nach einem der vorhergehenden Ansprüche,
**dadurch gekennzeichnet,**
**dass** die Zahnräder des Kopplungsgetriebes (4) aus Kunststoff, bspw aus Guss-Polyamid bestehen.

8. Motor-Generator-Anordnung nach einem der vorhergehenden Ansprüche 1 bis 5 ,
**dadurch gekennzeichnet,**
**dass** der Gegenkolbenmotor ein ventilloser selbst zündender Injektionsmotor ist.

9. Motor-Generator-Anordnung nach einem der vorhergehenden Ansprüche 1 bis 5,
**dadurch gekennzeichnet,**
**dass** der Gegenkolbenmotor ein fremdgezündeter Motor ist.

10. Motor-Generator-Anordnung nach einem der vorhergehenden Ansprüche 1 bis 5,
**dadurch gekennzeichnet,**
**dass** der Gegenkolbenmotor ein Gas- oder Allgasmotor ist.

11. Verwendung einer Motor-Generator-Anordnung nach einem der vorhergehenden Ansprüche, als Antriebsaggregat für ein Fahrzeug.

## Claims

1. Engine/generator arrangement having an internal combustion engine in accordance with the opposed piston principle, having an arrangement of at least two opposed pistons which run in a cylinder with a common combustion chamber, the pistons which lie opposite one another acting on in each case one dedicated crankshaft, and each of the two crankshafts having a dedicated mechanical output (3, 3'), and the two outputs (3, 3') being synchronized via a coupling means (4), the two outputs (3, 3') being coupled rigidly via a beltless or chainless coupler mechanism (4), **characterized in that** coupling elements which are torsionally elastic and/or can be offset laterally are arranged in each case between the outputs of the crankshafts and the coupler mechanism (4) and between the coupler mechanism (4) and the coupler mechanisms (6, 6'), and **in that** the pistons via crankshafts which are in engagement with connecting rods is provided with at least one non-rotationally symmetrical eccentric flywheel body on at least one side, in addition to the connecting rod engagement on the crankshaft, and **in that** the eccentric flywheel body is provided with a circular disc element or circular ring element which in turn runs directly next to it centrically with respect to the crankshaft, and the eccentric flywheel body and/or circular disc element dip/dips at least partially into an oil bath or oil sump during operation, in such a way that the eccentric body (22) dips into the oil bath repeatedly over a part section of its rotation and therefore throws oil upwards, and the oil which is thrown upwards is fed via the circular disc element or circular ring element (23) to the locations to be lubricated.

2. Engine/generator arrangement according to Claim 1 **characterized in that** two further outputs are provided at the outlet of the coupler mechanism (4) for use in a heat and power cogeneration plant BHKW, and each of the said outputs is connected via in each case one coupling element (5, 5') or a mechanism/coupling arrangement (6, 6') to a, or in each case one, generator (7, 7').

3. Engine/generator arrangement according to Claim 2, **characterized in that** a cam plate is arranged on one of the crankshafts, via which cam plate a fuel injection pump is actuated which is arranged on the corresponding crankcase.

4. Engine/generator arrangement according to Claim 3, **characterized in that** the fuel injection pump is arranged on a carrying element (support), the position of which can have its angle adjuster.

5. Engine/generator arrangement according to Claim 1 or 2, **characterized in that** the engine and the coupler mechanisms are arranged on a common carrier chassis.

6. Engine/generator arrangement according to one of the preceding claims, **characterized in that** the mechanical coupling between the coupler mechanism and the clutch of the generator also takes place via a torsionally elastic coupling element.

7. Engine/generator arrangement according to one of the preceding claims, **characterized in that** the gearwheels of the coupler mechanism (4) consist of plastic, for example of cast polyamide.

8. Engine/generator arrangement according to one of the preceding Claims 1 to 5, **characterized in that** the opposed piston engine is a valveless compressionignition injection engine.

9. Engine/generator arrangement according to one of the preceding Claims 1 to 5, **characterized in that** the opposed piston engine is a spark-ignition engine.

10. Engine/generator arrangement according to one of the preceding Claims 1 to 5, **characterized in that** the opposed piston engine is a gas engine or all-gas engine.

11. Use of an engine/generator arrangement according to one of the preceding claims as a drive unit for a vehicle.

## Revendications

1. Ensemble moteur-générateur, comprenant un moteur à combustion interne selon le principe des contre-pistons, comprenant un agencement d'au moins deux contre-pistons se déplaçant dans un cylindre avec une chambre de combustion commune, les pistons opposés agissant à chaque fois sur un vilebrequin propre, et chacun des deux vilebrequins présentant une prise de force mécanique propre (3, 3'), et les deux prises de force (3, 3') étant synchronisées par le biais de moyens de couplage (4), les deux prises de force (3, 3') étant accouplées rigidement par le biais d'un engrenage de couplage (4) sans courroie ou sans chaîne, **caractérisé en ce qu'à** chaque fois entre les prises de force des vilebrequins et l'engrenage de couplage (4) et entre l'engrenage de couplage (4) et les engrenages d'accouplement (6, 6') sont disposés des éléments de couplage élastiques en torsion et/ou pouvant être déplacés latéralement, et **en ce que** les pistons par le biais des vilebrequins qui sont en prise avec des bielles est pourvu au niveau d'au moins un côté, en plus de l'engagement par bielle au niveau du vilebrequin, d'au moins un corps oscillant excentrique sans symétrie de révolution, et **en ce que** le corps oscillant excentrique est pourvu d'un élément annulaire circulaire ou sous forme de disque circulaire s'étendant à son tour directement à côté de lui centralement par rapport au vilebrequin, et le corps oscillant excentrique et/ou l'élément de disque circulaire plongent pendant le fonctionnement au moins en partie dans un bain d'huile d'un carter d'huile de telle sorte que le corps excentrique (22) plonge toujours dans le bain d'huile sur une partie de sa rotation, et éjecte ainsi de l'huile vers le haut par centrifugation, et l'huile accélérée vers le haut par le biais de l'élément de disque circulaire ou annulaire circulaire (23) est acheminée uniformément aux endroits à lubrifier.

2. Ensemble moteur-générateur selon la revendication 1, **caractérisé en ce que** pour l'utilisation dans une centrale thermique BHKW, à la sortie de l'engrenage de couplage (4), deux prises de force supplémentaires sont prévues, et chacune de ces prises de force est connectée par le biais d'un élément de couplage respectif (5, 5') ou d'un agencement d'accouplement à engrenage (6, 6') à un générateur (7, 7') ou un générateur respectif.

3. Ensemble moteur-générateur selon la revendication 2,
**caractérisé en ce que**
sur l'un des vilebrequins est disposé un disque de came, par le biais duquel une pompe d'injection de carburant est actionnée, laquelle est disposée au niveau du carter de vilebrequin correspondant.

4. Ensemble moteur-générateur selon la revendication 3,
**caractérisé en ce que**
la pompe d'injection de carburant est disposée sur un élément de support (support) dont la position angulaire peut être ajustée.

5. Ensemble moteur-générateur selon la revendication 1 ou 2,
**caractérisé en ce que**
le moteur et l'engrenage de couplage sont disposés sur un châssis porteur commun.

6. Ensemble moteur-générateur selon l'une quelconque des revendications précédentes,
**caractérisé en ce que**
le couplage mécanique entre l'engrenage de couplage et l'accouplement du générateur s'effectue également par le biais d'un élément de couplage élastique en torsion.

7. Ensemble moteur-générateur selon l'une quelconque des revendications précédentes,
**caractérisé en ce que**
les roues dentées de l'engrenage de couplage (4) se composent de plastique, par exemple de polyamide coulé.

8. Ensemble moteur-générateur selon l'une quelconque des revendications précédentes 1 à 5,
**caractérisé en ce que**
le moteur à contre-pistons est un moteur sans soupape à auto-injection.

9. Ensemble moteur-générateur selon l'une quelconque des revendications précédentes 1 à 5,
**caractérisé en ce que**
le moteur à contre-pistons est un moteur à allumage par étincelle.

10. Ensemble moteur-générateur selon l'une quelconque des revendications précédentes 1 à 5,
**caractérisé en ce que**
le moteur à contre-pistons est un moteur à gaz ou tous gaz.

11. Utilisation d'un ensemble moteur-générateur selon l'une quelconque des revendications précédentes, en tant que groupe motopropulseur pour un véhicule.
